**Europäisches Patentamt**

**European Patent Office**

**Office européen des brevets**

(19)

(11) Numéro de publication: **0 011 337 B1**

(12) **FASCICULE DE BREVET EUROPEEN**

(45) Date de publication du fascicule de brevet: **18.11.81**

(51) Int. Cl.³: **B 60 N 1/12, A 47 D 1/10**

(21) Numéro de dépôt: **79200652.0**

(22) Date de dépôt: **07.11.79**

(54) **Dispositif protecteur pour le transport des enfants.**

(30) Priorité: **08.11.78 FR 7832063**

(43) Date de publication de la demande:
**28.05.80 Bulletin 80/11**

(45) Mention de la délivrance du brevet:
**18.11.81 Bulletin 81/46**

(84) Etats contractants désignés:
**AT BE CH DE GB IT LU NL SE**

(56) Documents cités:
**DE-A-2 527 123**
**US-A-3 297 358**
**US-A-3 690 525**

(73) Titulaire: **Monot, Michel, Le Bois des Grottes
Asnières-Les-Dijon, F-21380 Messigny (FR)**
Titulaire: **Monot, Hubert, Le Bois des Grottes
Asnières-Les-Dijon, F-21380 Messigny (FR)**

(72) Inventeur: **Monot, Michel, Le Bois des Grottes
Asnières-Les-Dijon, F-21380 Messigny (FR)**
Inventeur: **Monot, Hubert, Le Bois des Grottes
Asnières-Les-Dijon, F-21380 Messigny (FR)**

(74) Mandataire: **Silhol, Christian Maurice Alfred, c/o
BUGNION S.A. Conseils en Propriété
Industrielle 10, route de Florissant Case 42,
CH-1211 Geneve 2 (CH)**

## Dispositif protecteur pour le transport des enfants

L'invention concerne les moyens d'assurer le déplacement des enfants notamment à l'intérieur de véhicules automobiles, plus particulièrement un dispositif protecteur comportant un dossier enveloppant muni d'un appui-tête surmontant un siège entouré de flancs capitonnés, un repose-pied, l'ensemble étant susceptible d'être fixé par des moyens appropriés entre les sièges avant et arrière d'un véhicule, contre le dossier d'un siège.

Dans ce domaine on connaît plusieurs réalisations antérieures.

Le brevet US 1 380 678 PRICE décrit un fauteuil d'enfant comprenant un dossier, des accoudoirs et un repose-pied monté par des moyens d'accrochage au dossier de la banquette avant et comprenant un piètement reposant sur le plancher de la voiture.

Le brevet US 2 890 740 LARSON a pour objet un siège d'enfant comprenant un repose-pied, des moyens d'accrochage au dossier et un piètement réglable en hauteur.

Le brevet US 1 629 834 MILLER décrit un siège d'enfant amovible fixé au dossier.

Le brevet US-A 3 690 525 (KOONS) décrit un appareil ayant les caractéristiques d'un dispositif protecteur pour le transport des enfants comportant deux éléments indépendants pourvus de moyens d'accrochage et de décrochage de l'un par rapport à l'autre.

La demande de brevet FR 2 363 305 décrit un fauteuil d'enfant pour auto comportant en particulier, un dossier muni d'un appui-tête, un dispositif pour maintenir l'enfant contre le dossier, des accoudoirs, un repose-pied monté réglable en hauteur sur une armature rigide munie d'un piètement reposant sur le plancher de l'auto, ladite armature étant maintenue en position entre les banquettes avant et arrière de l'auto par des moyens d'accrochage au dossier de la banquette avant, caractérisé par le fait que l'écartement entre les dossiers respectifs du fauteuil et de la banquette avant est déterminé par la longueur, réglable, des accoudoirs du fauteuil.

Les inconvénients communs à ces réalisations résident dans le fait que la sécurité de l'enfant, en cas de choc arrière, est insuffisante d'une part, dans le fait que la séparation du siège d'avec ses moyens de fixation dans le véhicule est laborieuse, d'autre part.

Le but de l'invention est de réaliser un dispositif de protection de l'enfant qui soit à la fois efficace à l'égard des chocs d'où qu'ils viennent, et autonome, de façon qu'il puisse être enlevé rapidement du véhicule sans que l'enfant soit sorti de son enveloppe protectrice dans laquelle il est possible de le déplacer ailleurs que dans un véhicule.

A ces fins, le dispositif selon l'invention est constitué d'au moins deux éléments indépendants pourvus de moyens d'accrochage et de décrochage rapides l'un par rapport à l'autre, l'un de ces éléments étant une coque rigide enveloppant l'enfant de la tête aux pieds, comportant une face ouverte dont la plus grande partie de la périphérie est dans un plan unique sensiblement parallèle au fond plein de la coque, ladite coque étant d'une seule pièce comporte plusieurs parties, un fond, une capote, un siège, une gouttière pour les jambes dans laquelle coulisse un repose-pied suspendu, l'autre élément étant un cadre rigide muni de moyens de fixation au dossier du siège d'un véhicule, les moyens d'accrochage et de décrochage susdits consistant en des moyens de fixation rapide de la coque sur le cadre et des moyens de maintien de celle-ci dans une position prédéterminée par rapport au cadre.

Les principaux avantages apportés par ce dispositif résident dans le fait que la coque rigide protège l'enfant contre tous les chocs aussi bien à l'intérieur d'un véhicule que lorsqu'il est utilisé comme berceau pour déplacer l'enfant. Par ailleurs, la mise en place de la coque dans une voiture, tout autant que son extraction, se font rapidement et facilement, sans qu'il soit nécessaire pour ce faire d'enlever l'enfant de la coque où il peut sinon s'endormir tout au moins se sentir bien à l'aise et gigoter sans risque.

D'autres avantages ressortiront de la description qui va suivre d'une forme de réalisation du dispositif, préférentielle mais non limitative, et du dessin dans lequel:

la figure 1 est une vue d'ensemble du dispositif mis en place derrière le dossier de voiture;
la figure 2 est une vue latérale de la coque;
la figure 3 est une vue à plat de la coque;
la figure 4 est une vue à plat du cadre;
la figure 5 est une vue de profil du cadre.

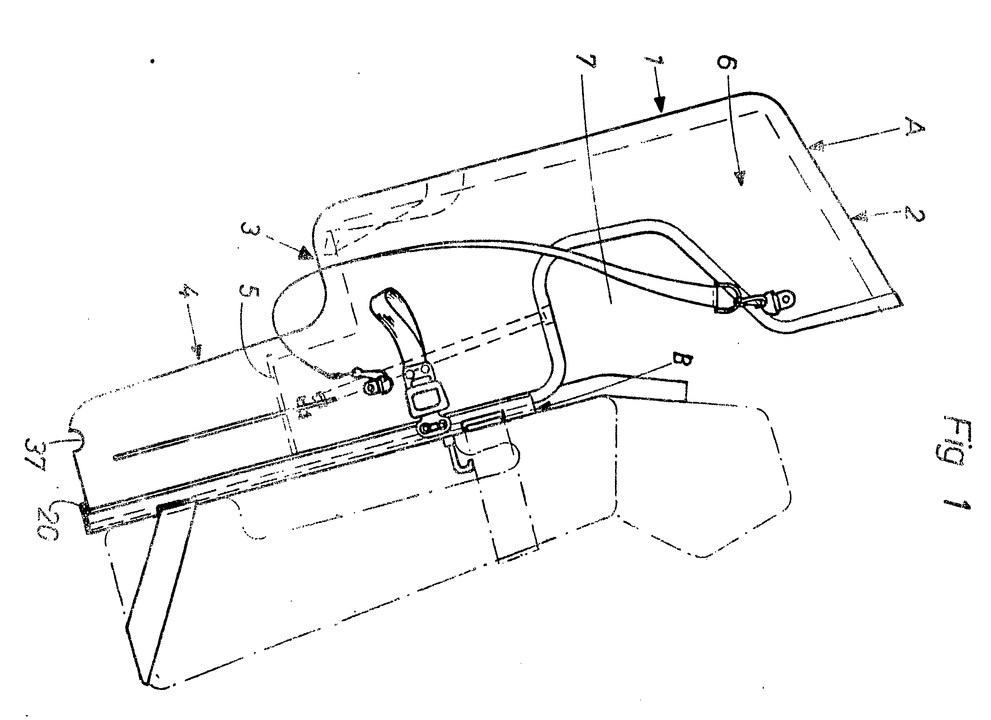

La figure 1 permet de voir les deux éléments constituant le dispositif selon l'invention: — la coque A, rigide, enveloppant l'enfant de la tête aux pieds, ouverte sur le côté opposé au fond 1 de la coque, de façon à constituer un réceptacle pour l'enfant qui peut regarder devant et autour de lui sans contrainte;
— le cadre B, rigide, muni de moyens de fixation au dossier d'un siège de véhicule, de réception de ladite coque et de maintien de celle-ci dans une position prédéterminée par rapport au cadre.

La coque A fabriquée d'une seule pièce, comme les coques de bateaux, en tissus de verre imprégnés de résine polymérisée, est renforcée, au niveau de la tête de l'enfant, par des fibres de carbone.

On peut distinguer plusieurs parties dans cette coque d'une seule pièce:
— une capote 2 protégeant la tête de l'enfant,
— un fond 1 formant dossier,
— un siège 3 sur lequel l'enfant s'asseoit,
— une gouttière 4 pour les jambes,
— un repose-pied 5 mobile dans la gouttière.

Les flancs 6 de la coque comportent une échancrure 7 délimitant le bas de la capote 2 de façon que l'enfant puisse voir de chaque côté et n'ait pas l'impression d'être enfermé dans une caisse.

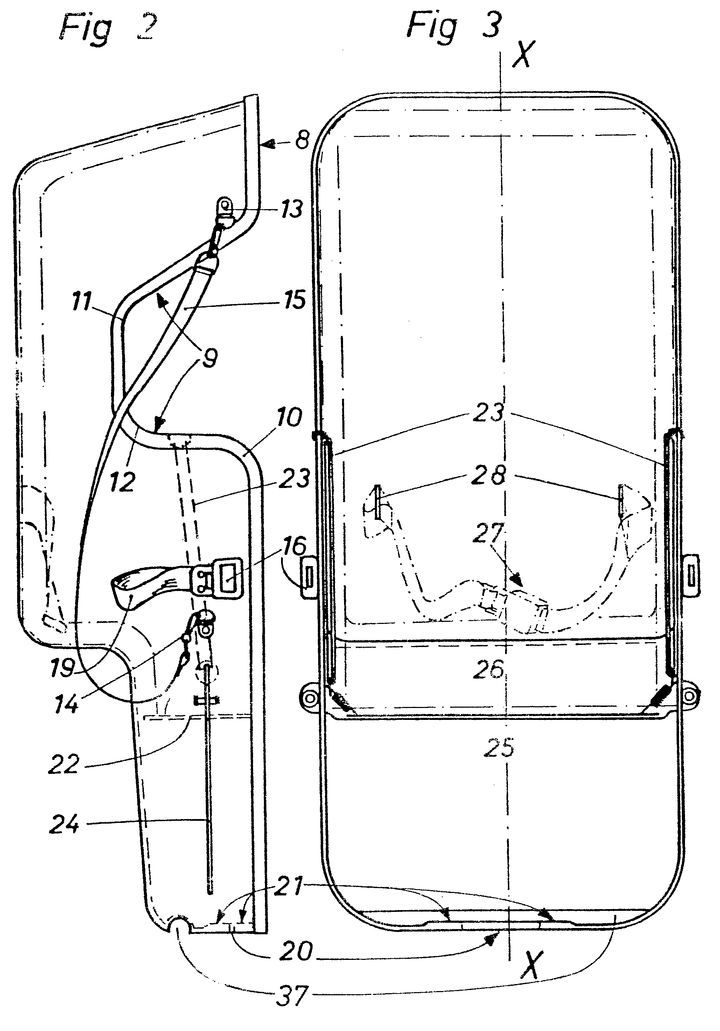

Les figures 2 et 3 permettent de voir les détails de construction de la coque A dûment munie des accessoires qui font partie du dispositif décrit.

Les bords 8 de la coque sont dans un plan unique, sensiblement parallèles au fond 1, à l'exception des bords 9 des échancrures 7. Un bourrelet protecteur 10 revêt l'ensemble desdits bords et contribue à leur rigidité relative, notamment aux points de courbure 11, 12 de l'échancrure 7. Les points 11, 12 sont également renforcés par des fibres de carbone afin d'augmenter la résistance de la capote qui pourrait être diminuée par les échancrures 7 uniquement nécessaires au confort de l'enfant.

Les échancrures 7 ne sont aucunement indispensables et on peut éviter l'inconvénient qu'elles présentent quant à la rigidité de la capote par rapport à l'ensemble de la coque en cas de choc arrière. Dans d'autres formes de réalisation non représentées, les échancrures sont:
— supprimées de façon que les bords périphériques de la coque soient en totalité dans un plan unique;
— partiellement obturées par un ou plusieurs barreaux, éventuellement amovibles;
— fermées par une plaque transparente, amovible afin de faciliter l'installation de l'enfant dans la coque.

La coque A comporte plusieurs moyens permettant des utilisations différentes:
— des points d'accrochage 13, 14 d'une lanière 15 par laquelle la coque A peut être suspendue pour servir de berceau transportable ou attachée à un chariot pliant muni de roues pour devenir une poussette mobile, la fixation de la coque sur le chariot étant complétée par une rainure 37 dans laquelle se met en place le support des roues dudit chariot;
— deux boucles 16 réceptrices des moraillons de ceinture de sécurité dont deux exemplaires, identiques aux moraillons 18 des ceintures de la voiture, sont fixés sur le cadre B, de façon qu'en coopération avec une fente 20 ménagée dans le fond de la gouttière 4 et dont la périphérie est renforcée par une surépaisseur 21, elles permettent une mise en place facile derrière le dossier d'un siège de véhicule sur lequel aura été préalablement fixé le cadre B, et surtout un retrait rapide, non moins facile, hors du véhicule, sans qu'il soit nécessaire de déranger l'enfant qui bien souvent sera endormi.

L'avantage d'une telle fixation est très important du point de vue de la sécurité, notamment en cas d'accident lorsque les risques d'incendie sont grands: la coque protège l'enfant contre les chocs, les flammes et surtout, pour l'extraire du véhicule, il est recommandé de le laisser dans cet habitacle protecteur.

Ce confort transportable permet également de laisser en place le cadre B et même d'en placer dans plusieurs voitures utilisées avec une seule coque A, passant de l'une à l'autre selon les besoins.

Deux dragonnes 19, fixées à la coque au niveau des boucles 16, permettent de maintenir la coque A, à plat sur le siège arrière, lorsque l'enfant est trop jeune pour s'asseoir, en faisant passer la ceinture de sécurité à travers au moins une dragonne. Dans cette utilisation, un filet protecteur est fixé sur les bords de la coque par enveloppement de ceux-ci pour que l'enfant ne soit pas éjecté de la coque si la voiture fait des tonneaux.

Les matériaux entrant dans la constitution de la coque et ceux qui sont employés pour son revêtement tant extérieur qu'intérieur sont auto-extinguibles.

La mousse utilisée pour les nombreux capitonnages de la coque est également employée pour constituer un bouclier 17 protecteur placé entre la coque A et le cadre B, contre la face arrière du dossier d'un siège de véhicule.

Cette mousse est d'une densité de l'ordre du 40 kg, au m³, elle est dite «de qualité ferme» et s'éteint d'elle-même en cas d'inflammation accidentielle.

Le siège 3 est recouvert d'un coussin qui fait partie intégrante du capitonnage intérieur de la coque, lequel est d'une seule pièce, amovible ou cousue, moulée ou injectée avec la mousse citée.

Un repose-pied 22, suspendu de chaque côté par des bandes élastiques 23 fixées sur les flancs de la gouttière 4, coulisse dans celle-ci qu'il traverse de part en part, perpendiculairement à son axe XX. Les bandes élastiques 23 servent également à amortir les chocs des genoux de l'enfant contre les flancs de la gouttière 4.

Le repose-pied 22, découpé dans une plaque métallique ou moulé en matière plastique, est dûment revêtu d'un capitonnage souple, y compris à sa périphérie dont le tranchant est amorti. Il est muni de deux oreilles 25 suffisamment longues pour passer à travers deux fentes longitudinales 24 découpées dans les flancs de la gouttière 4 qui servent de glissières. Un rivet fixé sur chaque oreille empêche celle-ci de sortir de sa fente 24 et le repose-pied de se coincer en diagonale dans la gouttière. Chaque oreille étant dans un plan perpendiculaire à celui du repose-pied, son bord d'attache est recouvert d'un bourrelet protecteur 26 afin que l'enfant ne puisse s'y blesser les pieds. Le repose-pied 22 s'efface en quelque sorte au moindre choc et l'enfant se reçoit debout contre le bouclier de mousse 17 qu'il a devant lui, ce qui évite toute luxation ou bris d'os, ceux de la hanche en particulier, dont les articulations sont fragiles.

Afin de maintenir l'enfant dans la coque A, deux moyens sont employés:
— une ceinture de sécurité 27, dont l'élasticité est limitée mais réelle lorsque l'enfant est placé dans la coque, par une bande élastique 28 formant une ganse sur chaque brin de façon que l'enfant ait l'impression d'une certaine liberté de mouvement, limitée rigoureusement en cas de choc;
— le filet protecteur précité.

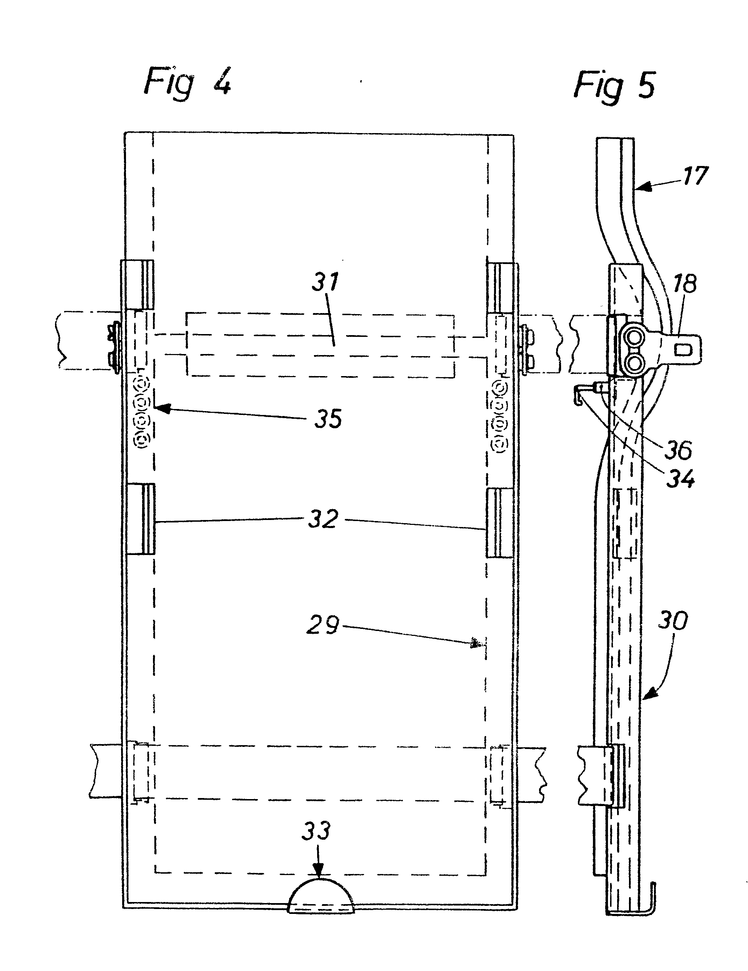

Le cadre B, représenté par les figures 4, 5, forme un rectangle constitué par une cornière dont une aile 29 est placée contre le dossier d'un siège de véhicule, l'autre aile 30 portant des moraillons 18 de fixation de la coque A dans les boucles réceptrices 16, fixées sur la coque.

Un fer plat 31 renforce les points de fixation et maintient l'écartement des moraillons 18 lesquels sont munis d'un chapeau protecteur pour éviter qu'ils soient dangereux pour le passager arrière lorsque la coque A n'est pas en place sur le cadre B.

Les côtés longs du cadre sont munis d'équerres 32 réparties sur l'aile 29 de façon que les bords 8 de la coque soient solidement maintenus et ne sortent pas du cadre en cas de chocs latéraux. La partie du cadre mise en place dans le bas d'un dossier de siège d'un véhicule comporte, à égale distance des deux côtés longs, une languette 33 qui est introduite dans la fente 20 de la coque, languette qui détermine la position exacte de la coque A par rapport au cadre B pour que l'encliquetage des moraillons 18 dans les boucles 16 ait lieu sans difficulté. Le cadre B est fixé au dossier d'un siège de véhicule par au moins une sangle faisant le tour dudit dossier, et, lorsque la construction de ce dossier le permet, par deux tiges 34, coudées à l'une de leurs extrémités pour passer derrière un renfort du dossier, l'autre extrémité, filetée, passant au travers d'un des trous 35 percés dans l'aile 29 des côtés longs du cadre, pour être serré au moyen d'une vis creuse 36, de façon à éviter que le bout de la tige 34 fasse saillie en créant une aspérité dangereuse pour l'enfant.

Dans le cas d'accrochage au siège avant d'une voiture si celui-ci reste inoccupé, la position du dossier de ce siège est renforcée par la mise en place de la ceinture de sécurité qui retiendra le dossier en cas de choc, sans que le poids de l'enfant dans la coque A fixée sur le cadre B risque d'entraîner le dossier vers l'avant de la voiture.

## Revendications

1. Dispositif protecteur pour le transport des enfants devant être fixé par des moyens appropriés derrière un siège d'un véhicule, constitué d'au moins deux éléments indépendants pourvus de moyens d'accrochage et de décrochage rapides de l'un par rapport à l'autre, caractérisé par le fait que l'un de ces éléments est une coque rigide (A) enveloppant l'enfant de la tête aux pieds, comportant une face ouverte dont la plus grande partie de la périphérie (8) est dans un plan unique sensiblement parallèle au fond plein (1) de la coque, ladite coque (A) étant d'une seule pièce comporte plusieurs parties, un fond (1), une capote (2), un siège (3), une gouttière (4) pour les jambes dans laquelle coulisse un repose-pied (5) suspendu, l'autre élément étant un cadre rigide (B) muni de moyens de fixation (34) au dossier d'un siège d'un véhicule, les moyens d'accrochage et de décrochage susdits consistant en des moyens de fixation rapide (18) de la coque sur le cadre et des moyens de maintien (33) de celle-ci dans une position prédéterminée par rapport au cadre.

2. Dispositif protecteur selon la revendication 1, caractérisé par le fait que les moyens d'accrochage et de décrochage rapides de la coque au cadre sont constitués par trois points, deux douilles (16) de ceinture de sécurité sur la coque (A) avec deux moraillons (18) correspondants sur le cadre (B) placés de chaque côté de l'axe de symétrie longitudinal de la coque, sensiblement au milieu de sa plus grande longueur et une fente (20) au bas de la gouttière (4) dans laquelle pénètre une languette (33) du cadre.

3. Dispositif protecteur selon la revendication 2, caractérisé par le fait que le cadre (B) comporte au moins une rainure (32) sur chacun de ses côtés les plus longs destinée à recevoir une partie du bord périphérique (8) de la coque (A) lors de la mise en place de celle-ci contre le cadre (B) afin d'éviter tout déplacement latéral de la coque (A) par rapport au cadre (B).

4. Dispositif protecteur selon la revendication 1, caractérisé par le fait que la coque (A) comporte sur chacun de ses flancs au moins deux points (13, 14) d'attache pour une lanière (15), disposés de façon à permettre le transport d'un enfant couché dans la coque (A).

5. Dispositif protecteur selon la revendication 1, caractérisé par le fait que la partie inférieure de la gouttière (4) de la coque (A) comporte une rainure (37) destinée à recevoir l'axe des roues d'un chariot léger pliant permettant l'utilisation de la coque (A) en poussette.

6. Dispositif protecteur selon la revendication 1, caractérisé par le fait que la ceinture de maintien (27) comporte sur chacun de ses brins une bande élastique (28) qui permet un allongement contrôlé de ceux-ci.

7. Dispositif protecteur selon la revendication 1, caractérisé par le fait que le repose-pied (5) est mobile dans la gouttière (4), suspendu sous le siège (3) par des bandes élastiques (23) servant également d'amortisseur de choc, comporte de chaque côté une oreille (25) coulissant dans une rainure (24) latérale de la gouttière ladite oreille (25) étant munie, à l'extérieur de la gouttière (4), d'un rivet (250) dont l'axe est perpendiculaire à la rainure.

8. Dispositif protecteur selon la revendication 1, caractérisé par le fait qu'une barre (31) maintien l'écartement des moraillons (18) sur le cadre (B).

## Patentansprüche

1. Schutzvorrichtung zum Transport von Kleinkindern, welche hinter dem Sitz eines Fahrzeuges befestigbar ist und aus wenigstens zwei unabhängigen Teilen mit Einrichtungen zum raschen Verhaken und Lösen dieser beiden Teile besteht, dadurch gekennzeichnet, dass der eine Teil als starre Schale (A) das Kind von Kopf bis Fuss einhüllt und eine offene Vorderseite aufweist, deren Umfang (8) zum grössten Teil in einer Ebene parallel zum geschlossenen Boden (1) der Schale liegt, welche einstückig mit einem Boden (1), einer Kopfhaube (2), einem Sitz (3) und einer Fussrinne (4) ausgebildet ist, innerhalb welcher eine Fussauflage (5) verschiebbar aufgehängt ist, und dass der andere Teil als starrer Rahmen (B) mittels Befestigungen (34) an der Rücklehne eines Fahrzeuges befestigbar ist, wobei die Einrichtungen zum raschen Verhaken und Lösen der beiden Teile aus einer Schnellbefestigung (18) für die Schale an dem Rahmen und aus einer Halterung (33) für die Schale in einer bestimmten Lage an dem Rahmen bestehen.

2. Vorrichtung nach Anspruch 1, dadurch gekennzeichnet, dass die Einrichtung zum raschen Verhaken und Lösen von Schale und Rahmen an drei Punkten angeordnet sind und aus zwei Sicherheitsgurtösen (16) an der Schale (A) und entsprechenden Schliessblechen (18) an dem Rahmen (B) beiderseits der Symmetrielängsachse der Schale und in der Mitte ihrer grössten Länge sowie aus einem Schlitz (20) unten an der Fussrinne (4) bestehen, in welchen eine Lasche (33) des Rahmens eingreift.

3. Vorrichtung nach Anspruch 2, dadurch gekennzeichnet, dass der Rahmen (B) auf jeder seiner Längsseiten wenigstens eine Nut (32) zur Aufnahme eines Teils des Umfangsrandes (8) der Schale (A) bei ihrem Ansetzen an den Rahmen aufweist, um jede seitliche Verschiebung der Schale gegenüber dem Rahmen zu verhindern.

4. Vorrichtung nach Anspruch 1, dadurch gekennzeichnet, dass die Schale (A) auf jeder ihrer Seiten wenigstens zwei Befestigungen (13, 14) für einen Gurt (15) aufweist zum Transport eines in der Schale liegenden Kindes.

5. Vorrichtung nach Anspruch 1, dadurch gekennzeichnet, dass unten an der Fussrinne (4) der Schale (A) eine Nut (37) zur Aufnahme der Radachse eines leichten, zusammenlegbaren Fahrgestelles vorgesehen ist zur Verwendung der Schale als Kinderwagen.

6. Vorrichtung nach Anspruch 1, dadurch gekennzeichnet, dass der Haltegurt (27) an jedem Strang einen elastischen Streifen (28) zu deren Verlängerung aufweist.

7. Vorrichtung nach Anspruch 1, dadurch gekennzeichnet, dass die in der Fussrinne (4) verschiebbare Fussauflage (5) unter dem Sitz (3) an elastischen Bändern (23) aufgehängt ist, die gleichzeitig als Stossdämpfer wirken, und auf jeder Seite mit einer Lasche (24) versehen ist, die in seitlichen Nuten (24) der Fussrinne geführt und ausserhalb der Fussrinne mit einem rechtwinklig zu der Nut ausgerichteten Niet versehen sind.

8. Vorrichtung nach Anspruch 1, dadurch gekennzeichnet, dass eine Stange (31) den Abstand der Schliessbleche (18) an dem Rahmen (B) hält.

**Claims**

1. Protection device for transporting children, of the type adapted to be fastened through suitable means to the back of a vehicle seat, which comprises at least two independent elements provided with means for quickly assembling and disassembling said elements, characterized in that one of said elements consists of a rigid shell (A) enclosing the child completely from head to foot and comprising an open face of which the greater part of the peripheral contour (8) is in a plane substantially parallel to the solid bottom (1) of the shell, said shell (A) forming a one-piece element comprising several portions, a bottom (1), a hood (2), a seat (3), a cradle (4) for receiving the child's legs, in which a suspended foot-rest is slidably mounted, the other element consisting of a rigid frame (B) provided with means (34) for securing same to the back of a vehicle seat, said assembling and disassembling means consisting of means (18) for quickly fastening said shell to said frame, and means (33) for holding said shell in a predetermined position in relation to said frame.

2. Protection device according to claim 1, characterized in that said means for quickly assembling and disassembling said shell and frame consist of three points, namly two safety belt locks (16) carried by said shell (A) and two corresponding clasps (18) carried by said frame (B), disposed on either side of the longitudinal center line of said shell, substantially in the middle of the major lenth thereof, and of a slot (20) formed in the bottom of said cradle (4) and engageable by a lug (33) rigid with said frame.

3. Protection device according to claim 2, characterized in that said frame (B) comprises at least one groove (32) formed on each one of its major sides for engagement by one portion of the peripheral edge (8) of said shell (A) when said shell (A) is fitted to said frame (B) in order to prevent any lateral movement of said shell (A) in relation to said frame (B).

4. Protection device according to claim 1, characterized in that said shell (A) comprises on each side face at least two anchoring points (13, 14) for a strap (15), said points being located with a view to facilitate the transport of a child lying in said shell (A).

5. Protection device according to claim 1, characterized in that the lower portion of the cradle (4) of shell (A) comprises a groove (37) engageable by a two-wheeled axle for utilizing the shell (A) as a baby carriage.

6. Protection device according to claim 1, characterized in that the safety belt (27) comprises on each section thereof a resilient strap (28) permetting a controlled elongation of said belt sections.

7. Protection device according to claim 1, characterized in that said foot rest is movable in said cradle (4) and suspended under said seat (3) by means of elastic straps (23) also acting as shock absorbers, and comprises on either side an ear (25) slidably engaged in a lateral groove (24) of said cradle, each ear (25) being provided externally of said cradle (4) with a rivet having its axis disposed perpendicularly to said groove.

8. Protection device according to claim 1, characterized in that a bar (31) is provided for keeping said clasps (18) at a constant relative spacing on said frame (B).

Fig 1

# Fig 2

# Fig 3

# Fig 4

# Fig 5